# EUROPÄISCHE PATENTANMELDUNG

(11) **EP 2 327 601 A2**
(43) Veröffentlichungstag der Anmeldung: **01.06.2011**
(21) Anmeldenummer: 10401204.2
(22) Anmeldetag: 30.11.2010
(51) Int. Cl.: B62B 3/00, B62B 3/16

(54) **Stapelbarer Rollbehälter mit Einschubböden**

(30) Priorität: 30.11.2009 DE 102009056363; 30.11.2009 DE 202009016204 U
(71) Anmelder: GEBHARDT Transport- und Lagersysteme GmbH, 93413 Cham (DE)
(72) Erfinder: Bernard, Oliver, 93476 Blaibach (DE); Kolnkofer, Christian, 93455 Traitsching (DE)
(74) Vertreter: Mischung, Ralf

(57) **Zusammenfassung**

Die Erfindung betrifft einen stapelbaren Rollbehälter (1) mit einem rechteckigen Boden (3), an welchem unterseitig Transportrollen (5) und zwei einander gegenüberstehende Seitenwände (7) angeordnet sind, wobei die vertikalen vorderen Endstreben (11) der Seitenwände mit ihren Innenseiten in jeweils einer von zwei vertikalen Referenzebenen (E-E) liegen und wobei die hinteren Endstreben (13) gegenüber der betreffenden Referenzebene (E-E) so weit nach innen versetzt sind, so dass ein weiterer derartiger Rollbehälter (1) von vorn zwischen die Seitenwände (7) des Rollbehälters (1) einsetzbar ist, wobei die Verbindungsstreben (15) so angeordnet und ausgebildet sind, dass sie bis auf einen vorderen Verbindungsabschnitt (15a) mit der vorderen Endstrebe (11) und bis auf einen hinteren Verbindungsabschnitt (15b) mit der hinteren Endstrebe (13) im Zwischenraum liegen, der durch die Referenzebene (E-E) und eine innere Begrenzungsebene begrenzt ist, welche durch die Außenseiten der hinteren Endstreben (13) definiert ist und parallel zur betreffenden Referenzebene (E-E) liegt. Erfindungsgemäß sind die Verbindungsstreben als Tragstreben (15) ausgebildet, so dass jeweils zwei einander zugeordnete Tragstreben (15) der beiden Seitenwände (7) als Tragmittel und Führungsmittel für jeweils einen Einschubboden (19) dienen, welcher zwischen die Seitenwände (7) einschiebbar ist. Des Weiteren betrifft die Erfindung einen Einschubboden (19) für einen derartigen Rollbehälter (1).

## Beschreibung

Die Erfindung bezieht sich auf einen stapelbaren Rollbehälter, insbesondere für den Transport von Lebensmitteln, Kosmetikartikeln oder Gebrauchsgegenständen in Großgebinden, mit den Merkmalen des Oberbegriffs des Patentanspruchs 1. Des Weiteren betrifft die Erfindung einen Einschubboden gemäß Patentanspruch 7 für einen derartigen Behälter.

Für den Transport von Lebensmitteln, Kosmetikartikeln oder anderen Gebrauchsgegenständen werden von den Handelsketten überwiegend sogenannte Rollbehälter verwendet. Hierbei wird unterschieden zwischen sogenannten nicht "nestbaren" Rollbehältern, d.h. Rollbehälter, welche nicht ineinander gesteckt werden können und stapelbaren Rollbehältern. Nicht nestbare Rollbehälter erfordern erhebliche Lagerraumkosten und sind unpraktisch in der Handhabung. Auch der Zerlegeaufwand (bspw. für einen Rücktransport) ist erheblich, und die Beschädigungsquote an Rollen und Rahmen ist besonders bei kopfüber transportierten Behältern erheblich.

Bekannte nestbare Rollbehälter haben einen speziell ausgebildeten Bodenrahmen, beispielsweise in Trapezform der Bodenkonstruktion oder die Gestaltung eines "Z" bzw. eines "V", wobei diese bekannten Konstruktionen ein geradliniges oder seitliches Nesten ermöglichen.

Die meisten bekannten Ausführungen von nestbaren Rollbehältern stellen gewichtsmäßig schwere Konstruktionen dar, die eine erhebliche Geräuschemission beim Rollen verursachen und daher für die moderne Fördertechnik nur eingeschränkt geeignet sind.

Die EP 1 777 137 A1 beschreibt einen Rollcontainer, der mit gleichartigen Containern nestbar also ineinander schiebbar ausgebildet ist. Zu diesem Zweck sind zwei relativ zu einem Verbindungssteg schwenkbar angeordnete und Rollen tragende Streben vorgesehen, die um ein Maß zueinander so verschwenkbar sind, dass weitere gleichartig ausgebildete Container in den zwischen den verschwenkten Streben entstehenden Raum eingesetzt werden können. Auf diese Weise können die Rollcontainer platzsparend angeordnet werden. Die schwenkbare Ausführung der Streben bedeutet jedoch einen entsprechenden konstruktiven Aufwand. Zudem wird hierdurch eine mangelnde Stabilität verursacht, was für den rauen Lagerbetrieb nachteilig ist, da es zu häufigen Beschädigungen bzw. Defekten des Containers kommen kann.

Zur Beseitigung dieses Nachteils des vorgenannten Standes der Technik ist aus der DE 10 2007 033 147 B4 ein stapelbarer Rollbehälter bekannt, bei dem die Seitenwände des Rollbehälters in spezieller Weise gestaltet sind, um eine Stapelbarkeit zu ermöglichen, ohne dass gelenkige Verbindungen verwendet werden. Hierzu ist jeweils die hintere Endstrebe jeder der einander gegenüberliegenden Seitenwände soweit gegenüber jeweils einer Referenzebene, in welcher die vordere Endstrebe liegt, nach innen eingezogen, dass der Behälter infolge der eingezogenen hinteren Endstreben zwischen die vorderen Endstreben eines weiteren Behälters eingesetzt werden kann. Die vorderen Endstreben müssen dabei selbstverständlich einen lichten Abstand aufweisen, der nicht nur größer als der (in der Breite des Behälters bemessene) Abstand der hinteren Endstreben, sondern auch größer als die Breite des Bodens. Dieser Behälter kann in den Seitenwandungen auch ein Gitter aufweisen, welches verhindert, dass Produkte seitlich vom Rollbehälter herunterfallen. Entsprechende Längs- und Querstreben müssen so positioniert sein, dass das Nesten noch gewährleistet werden kann, also in jeweils einem seitlichen Zwischenraum parallel zur Referenzebene, der jeweils von der hinteren Endstrebe bzw. der vorderen Endstrebe begrenzt ist.

Nachteilig bei diesem Rollbehälter ist jedoch, dass die Waren nur übereinander auf dem Boden des Behälters platziert werden können, so dass es nicht auf einfache Weise möglich ist, eine in der Mitte der entsprechend gestapelten Behälter befindlichen Waren herauszunehmen. Zur Lösung dieses Problems ist es lediglich bekannt, Zwischenböden in das Gitter der Seitenwände eines derartigen Behälters einzuhängen. Hierzu müssen die Zwischenböden jedoch gegenüber der horizontalen Ebene gekippt bzw. verkantet zwischen die Wände eingeführt und dann mit entsprechenden Eingriffsmitteln mit dem Gitter in Eingriff gebracht werden. Durch das notwendige Verkippen ist es nicht möglich, nachträglich einen Zwischenboden einzusetzten, wenn kein ausreichender vertikaler Spielraum zur Verfügung steht, weil dieser beispielsweise durch bereits eingebrachte Produkte oder den nächsten Zwischenboden begrenzt ist.

Aufgabe der vorliegenden Erfindung ist es daher, einen stapelbaren Rollbehälter zu schaffen, welcher bei einfachem konstruktivem Aufbau ein einfaches Einsetzen von Zwischenböden ermöglicht, ohne dass hierfür ein größerer Spielraum in der Höhe des Behälters zur Verfügung stehen muss, so dass auch ein problemloses nachträgliches Einsetzen von Zwischenböden ermöglicht wird. Des Weiteren liegt der Erfindung die Aufgabe zugrunde, einen Zwischenboden zu schaffen, der in Verbindung mit einem derartigen Behälter die genannten Vorteile bietet.

Die Erfindung löst diese Aufgaben mit den Merkmalen der Ansprüche 1 bzw. 7. Weitere vorteilhafte Ausführungsformen ergeben sich aus den Unteransprüchen.

Die Erfindung nutzt das aus der DE 10 2007 033 147 B4 bekannte Prinzip, die Stapelbarkeit des Behälters zu gewährleisten, wobei die vertikalen vorderen Endstreben in jeweils einer von zwei vertikalen Referenzebenen liegen und wobei die hinteren Endstreben gegenüber der betreffenden Referenzebene so weit nach innen versetzt sind, so dass ein weiterer derartiger Rollbehälter von vorn zwischen die Seitenwände des Rollbehälters einsetzbar ist. Die horizontalen Verbindungsstreben sind dabei so angeordnet und ausgebildet, dass sie bis auf einen vorderen Verbindungsabschnitt mit der vorderen Endstrebe und einen hinteren Verbindungsabschnitt mit der hinteren Endstrebe im Zwischenraum liegen, der durch zwei Begrenzungsebenen parallel zur betreffenden Referenzebene begrenzt ist, wobei die innere Begrenzungsebene durch die Außenseiten der hinteren Endstreben und die äußere Begrenzungsebene durch die Innenseiten der vorderen Endstreben definiert ist

Des Weiteren geht die Erfindung von der Erkenntnis aus, dass anstelle eines Einhängens von zunächst verkantet zwischen die Seitenwände eingebrachten Zwischenböden in die gitterartigen Streben der Seitenwände Tragstreben vorgesehen werden können, die das Einschieben eines Einschubbodens von der Vorderseite des Behälters her ermöglichen, wobei die Tragstreben nicht nur als Tragmittel im eingesetzten Zustand des Einschubbodens fungieren, sondern auch als Führungsmittel während des Einschiebens. Hierzu können seitliche Auflagemittel eines geeignet gestalteten Einschubbodens zunächst mit ihren hinteren Endbereichen auf die vorderen Bereiche der Tragstreben aufgesetzt und anschließend der Einschubboden nach hinten geschoben werden.

Dies setzt selbstverständlich voraus, dass die Tragstreben im Bereich der Auflagefläche für die Auflagemittel des Einschubbodens, die gleichzeitig als Führungsfläche für das Einschieben dienen, keine das Einschieben störenden Hindernisse aufweisen, insbesondere keine vertikalen Streben. Entweder wird auf derartige vertikale Streben vollständig verzichtet oder diese werden außerhalb dieser Auflagefläche mit den Tragstreben verbunden und müssen auch außerhalb verlaufen. Beispielsweise ist es möglich, vertikale Streben zur Erzeugung eines seitlichen Gitters mit jeweils der Außenseite der Tragstreben zu verbinden, wobei es allerdings nicht mehr möglich ist, die Tragstreben von bügelartigen, nach unten abgewinkelten Armen umgreifen zu lassen. Dies würde zumindest im Fall üblicherweise verwendeter, im Querschnitt rechteckiger oder kreisförmiger Tragstreben verhindern, dass der Einschubboden nach dem Einsetzen seines hintern Bereichs vollständig zwischen die Seitenwände eingeschoben werden kann, da die vertikalen Gitterstreben dies blockieren würden.

Es ist jedoch beispielsweise möglich, im Querschnitt komplexere Tragstreben zu verwenden, beispielsweise solche, die an der äußeren unteren Seite einen Vorsprung aufweisen, so dass ein Umgreifen des darüber liegenden Bereichs des Querschnitts durch die abgewinkelten Arme des Einschubbodens ermöglicht wird, auch wenn an der Außenseite der äußeren Vorsprünge im unteren Bereich des Querschnitts die vertikalen Gitterstreben befestigt sind. Es ist auch denkbar, einfache Querschnitte, z.B. einen rechteckigen oder runden Querschnitt für die Tragstreben zu verwenden und an deren Unterseite seitlich nach außen ragende Tragelemente für vertikale Gitterstreben vorzusehen.

Mit diesen Varianten ist es durch die Verwendung von vertikalen Streben, die mit den Tragstreben ein Gitter bilden, ermöglich, nicht nur korbartige Einschubböden zu verwenden, sondern auch Einschubböden, die nur eine Auflagefläche für Produkte aufweisen. Die vertikalen Gitterstäbe verhindern ein seitliches Herausfallen von Produkten aus dem Behälter.

Es ist darüber hinaus auch möglich, zusätzliche horizontale Streben, die nicht als Tragstreben dienen, zu verwenden, um das Gitter enger zu gestalten. Diese horizontalen Streben müssen, ebenso wie die vertikalen Streben, im Zwischenraum liegen, der durch zwei Begrenzungsebenen parallel zur betreffenden Referenzebene E-E begrenzt ist, um die Stapelbarkeit nicht zu beeinträchtigen.

Nach einer Ausführungsform der Erfindung können der vordere Verbindungsabschnitt einer Tragstrebe bezogen auf die Referenzebene einwärts und der hintere Verbindungsabschnitt auswärts gekrümmt sein und der dazwischen liegende Abschnitt der Tragstrebe parallel zur Referenzebene verlaufen. Durch das parallel verlaufende Stück der Tragstrebe ist gewährleistet, dass auch bei der Verwendung von Einschubböden mit Haltemitteln, welche die Tragstreben jeweils mit nach unten abgewinkelten Armen umgreifen (zumindest über eine ausreichende Höhe), ein Nach-Hinten-Schieben bzw. Herausziehen des Einschubbodens möglich ist, wobei eine seitliche Fixierung des Einschubbodens gewährleistet ist.

Nach der bevorzugten Ausführungsform der Erfindung ist an der Innenseite der vorderen Endstreben in jeweils einem Bereich oberhalb der Höhe jeder Tragstrebe eine Einbuchtung vorgesehen, wobei der Boden jeder Einbuchtung vorzugsweise so tief gewählt ist, dass er in einer zur Referenzebene parallelen Ebene liegt, welche durch die Außenseite der Tragstrebe definiert ist, oder gegenüber dieser Ebene nach außen versetzt ist. Auf diese Weise ist gewährleistet, dass die Auflagemittel der Einschubböden möglichst weit nach außen ragen können und gleichzeitig ein Einschieben des Einschubbodens ohne ein vorheriges verkantetes Einsetzen möglich ist.

Die Einbuchtungen weisen vorzugsweise eine Höhe auf, welche größer oder gleich ist der Höhe von seitlichen Auflagemitteln eines Einschubbodens, welcher von vorn zwischen die Seitenwände des Behälters einsetzbar ist. Damit können selbst nach unten abgewinkelte Haltemittel eines Einschubbodens, welche die Tragstreben zumindest nach einem teilweisen oder vollständigen Einschieben an deren Außenseite (teilweise) umgreifen, verwendet werden, ohne dass ein verkantetes Einsetzen des Einschubbodens erforderlich ist.

Die Erfindung wird nachfolgend anhand eines in der Zeichnung dargestellten Ausführungsbeispiels näher erläutert . In der Zeichnung zeigen:
- Fig. 1: eine perspektivische Ansicht eines einzelnen stapelbaren Rollbehälters mit einem teilweise eingeschobenen Einschubboden,
- Fig. 2: eine perspektivische Ansicht mehrerer gestapelter Rollbehälter nach Fig. 1,
- Fig. 3: eine Vorderansicht des Behälters in Fig. 1,
- Fig. 4: eine perspektivische Ansicht der linken Seitenwand des Behälters in Fig. 1,

- Fig. 5: einen vergrößerten Ausschnitt A der Ansicht in Fig. 4,
- Fig. 6: einen vergrößerten Ausschnitt B der Ansicht in Fig. 4,
- Fig. 7: einen vergrößerten Ausschnitt des rechten vorderen Bereichs eines in den Behälter nach Fig. 1 auf Tragstreben eingesetzten Einschubbodens und
- Fig. 8: einen vergrößerten Ausschnitt des rechten vorderen Bereichs eines in den Behälter nach Fig. 1 auf die Basisstreben eingesetzten Einschubbodens.

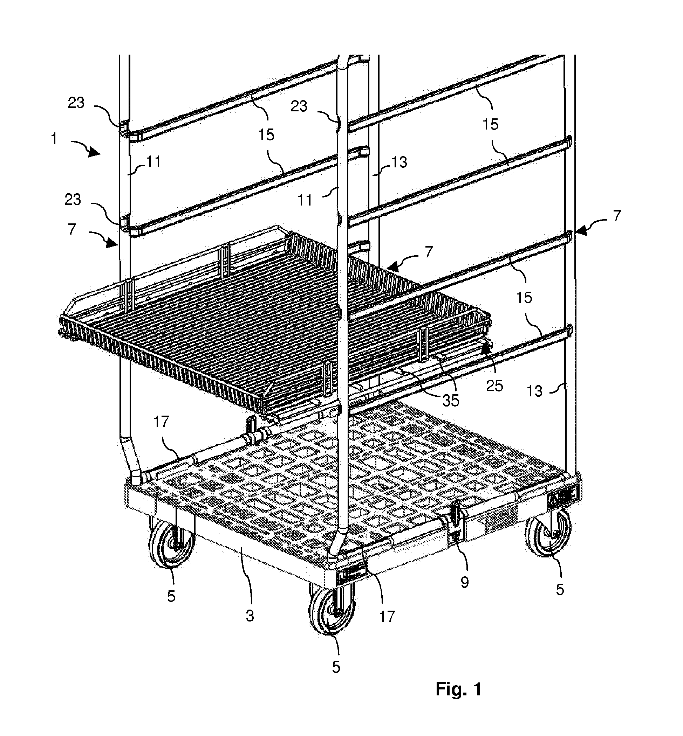

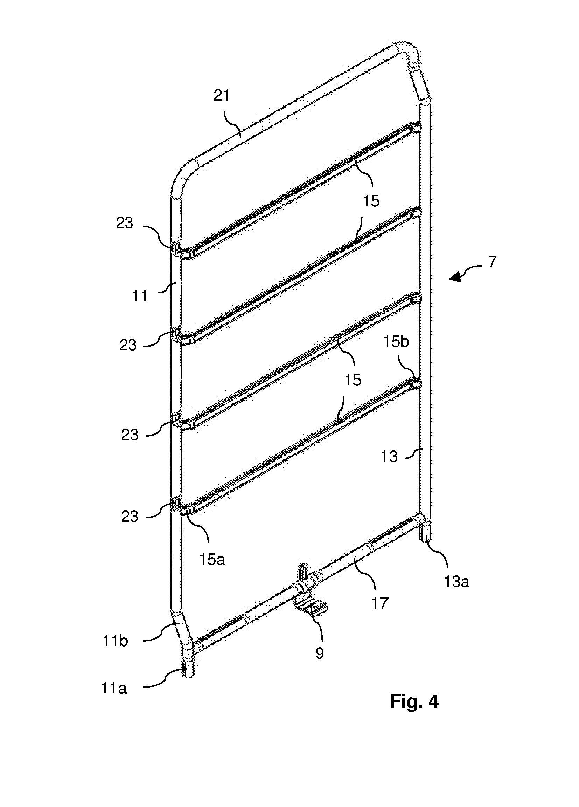

Fig. 1 zeigt ein Ausführungsbeispiel eines erfindungsgemäßen stapelbaren Rollbehälters 1, der einen rechteckförmigen Boden 3 aufweist, an dessen Unterseite 4 Rollen 5 angeordnet sind. Üblicherweise sind von den Rollen 5 zumindest zwei Rollen als Lenkrollen ausgebildet. Auf dem Boden 3 sind zwei Seitenwände 7 angeordnet, die, wie in Fig. 1 und Fig. 4 ersichtlich, mittels eines Befestigungselements 9 auf dem Boden 3 fixierbar sind. Jede Seitenwand 7 weist eine vertikale vordere Endstrebe 11 und eine vertikale hintere Endstrebe 13 auf, die jeweils über mehrere, im dargestellten Ausführungsbeispiel 4, horizontal verlaufende Tragstreben 15 verbunden sind.

An den jeweils unteren Endbereichen sind die vertikalen vorderen und hinteren Endstreben 11, 13 jeder Seitenwand 7 über eine Basisstrebe 17 verbunden. Die Endstreben 11, 13 ragen an ihren unteren Enden jeweils mit Einsteckbereichen 11 a bzw. 13a über die Basisstrebe 17 nach unten hinaus. Mit diesen Einsteckbereichen 11a, 13a können die Seitenwände 7 in entsprechende Ausnahmeöffnungen im Boden 3 eingesteckt werden. Nach dem Einstecken werden diese mit den Befestigungselementen 9, die beispielsweise als Fixierklammer ausgebildet sein können, mit dem Boden lösbar verbunden. Auf diese Weise können die Seitenwände 7 schnell und einfach auf dem Rollboden 3 montiert und wieder demontiert werden.

Auf jeweils zwei zusammenwirkende Tragstreben 15 der Seitenwände 7 kann in der jeweiligen Höhe ein Einschubboden 19 eingeschoben werden. Der Einschubboden kann, wie in Fig. 1 dargestellt, korbartig ausgebildet sein. Auf diese Weise wird vermieden, dass Produkte, die auf den Einschubboden gelegt werden, seitlich durch die Seitenwände 7 herausfallen. Selbstverständlich können die Seitenwände 7 jedoch auch an ihrer Außenseite über weitere vertikale und horizontale Gitterstäbe (nicht dargestellt) verfügen, so dass ein Herausfallen von Produkten auch dann vermieden werden kann, wenn die Einschubböden 19 als einfache, einschiebbare Zwischenböden ausgebildet sind. Zusätzlich kann selbstverständlich auch an der Rückseite des Rollbehälters 1 eine Rückwand vorgesehen sein, die ebenfalls als Steckwand ausgebildet sein und in gleicher Weise mit dem Boden 3 verbunden werden kann, wie die Seitenwände 7. Selbstverständlich kann eine derartige Rückwand auch lösbar mit den Seitenwänden 7 verbunden werden.

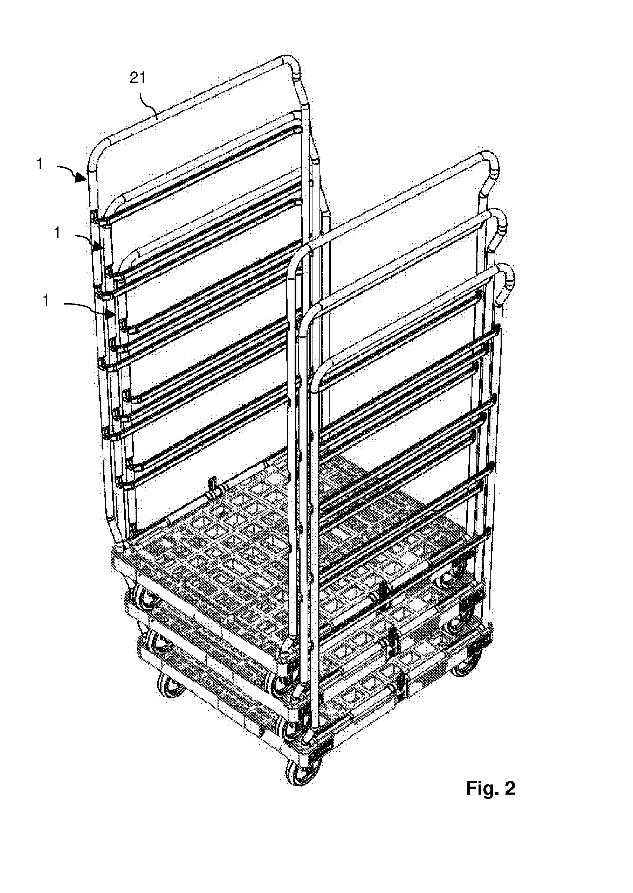

Die Seitenwände 7 sind, wie aus Fig. 2 ersichtlich, durch eine spezielle Gestaltung der Seitenwände hinsichtlich deren Geometrie stapelbar ausgebildet, wobei jeweils ein Rollbehälter 1 in einen anderen Rollbehälter 1 von vorne her eingesetzt werden kann.

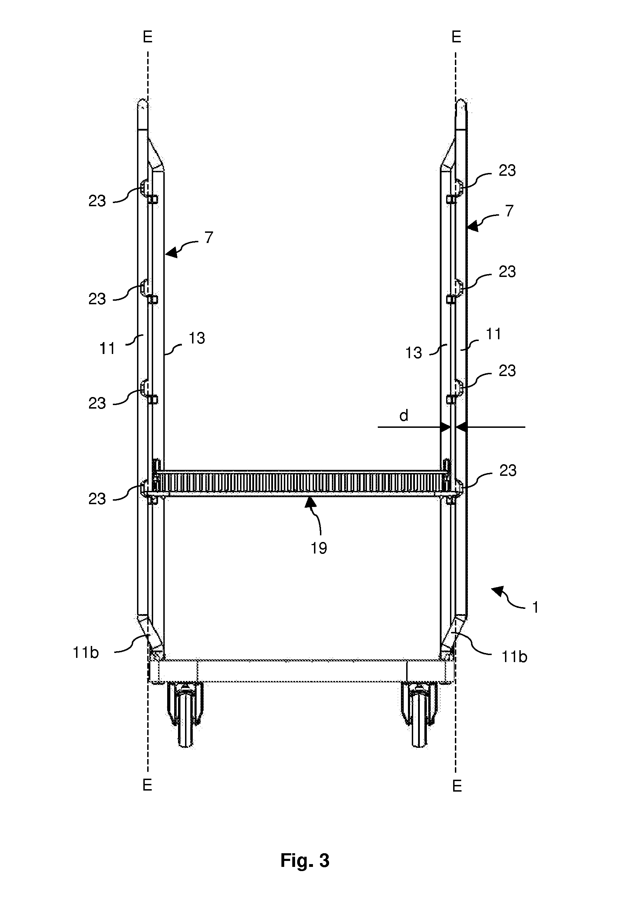

Die spezielle Geometrie der Seitenwände 7 ist insbesondere aus den Fig. 3 - 6 ersichtlich. Wie in Fig.3 dargestellt, definieren die vorderen Endstreben 11 der Seitenwände 7 vertikale Ebenen E-E, die zueinander parallel verlaufen und ebenfalls parallel zu den Außenseiten der rechteckigen Böden 3 des Rollbehälters 1 liegen. Genau genommen sind die Referenzebenen E-E jeweils durch die Innenseiten der vorderen Endstreben 11 festgelegt. Die hinteren Endstreben 13 sind gegenüber den Referenzebenen E-E soweit nach innen versetzt, dass, wie aus der Vorderansicht bzw. Projektion der Seitenwandungen in Fig. 3 erkennbar, die gesamte hintere Endstrebe 13 jeweils innerhalb des Zwischenraums zwischen den beiden Referenzebenen E-E liegt. Auf diese Weise wird ermöglicht, dass ein derartiger Rollbehälter 1 von vorne in einen identischen Rollbehälter 1 eingesetzt werden kann. Voraussetzung hierfür ist selbstverständlich, dass die Breite des Bodens 3 eines derartigen Rollbehälters 1 kleiner ist als der Abstand der Ebenen E-E zueinander. Dies wird dadurch erreicht, dass die vorderen Endstreben 11 über einen nach außen abgewinkelten Verbindungsabschnitt 11 b mit der jeweiligen Basisstrebe 17 verbunden ist.

Um die Stapelbarkeit des Rollbehälters 1 zu ermöglichen, ist es des Weiteren erforderlich, dass auch die Tragstreben 15 so ausgebildet sind, dass sie zumindest mit demjenigen Abschnitt, der in jeweils einen weiteren Behälter in der Tiefe der Seitenwände 7 eingeschoben werden soll, nicht über die betreffende Referenzebene E-E nach außen ragen (bezogen auf den Zwischenraum zwischen den Ebenen E-E). Gleichzeitig darf dieser horizontale Abschnitt der Tragstreben 15 mit der betreffenden Innenseite auch nicht weiter nach innen ragen als diejenige Ebene, die durch die Außenseite der hinteren Endstrebe13 definiert ist und parallel zur Referenzebene E-E liegt. Mit anderen Worten, derjenige Teil der Tragstreben 15, welcher vorzugsweise parallel zur Referenzebene E-E verläuft und zwischen einem vorderen Verbindungsabschnitt 15a und einem hinteren Verbindungsabschnitt 15b liegt, muss mit seinem gesamten Querschnitt in dem Zwischenraum zwischen der betreffenden Referenzebene E-E und der vorstehend definierten weiteren Ebene liegen. Anders ausgedrückt muss die Projektion des Abschnitts einer Tragstrebe 15 zwischen den Verbindungsabschnitten 15a, 15b im Abstand der Projektionen der vorderen und hinteren Endstreben 11, 13 liegen, der in Fig. 3 mit d dargestellt ist.

Die Tragstreben 15 können beispielsweise als im Querschnitt rechteckförmige Rohre ausgebildet sein.

Wie bereits vorstehend erwähnt, können an der Außenseite der Tragstreben 15 horizontale Gitterstreben (nicht dargestellt) angeordnet sein. Diese müssen ebenfalls im zuvor angesprochenen Zwischenraum liegen, um weiterhin die Stapelbarkeit des Behälters zu gewährleisten.

Wie aus Fig. 4 ersichtlich, kann jede Seitenwand 7 auch eine obere horizontale Verbindungsstrebe 21 aufweisen, welche mit ihrem wesentlichen Teil, d.h. bis auf einen Verbindungsabschnitt 21 a in der Ebene der vorderen Basisstrebe 11 liegt. Der Verbindungsabschnitt 21 a erstreckt sich ausgehend von der hinteren Endstrebe 13 nach außen. Hierdurch wird die Stapelbarkeit des Rollbehälters 1 sichergestellt.

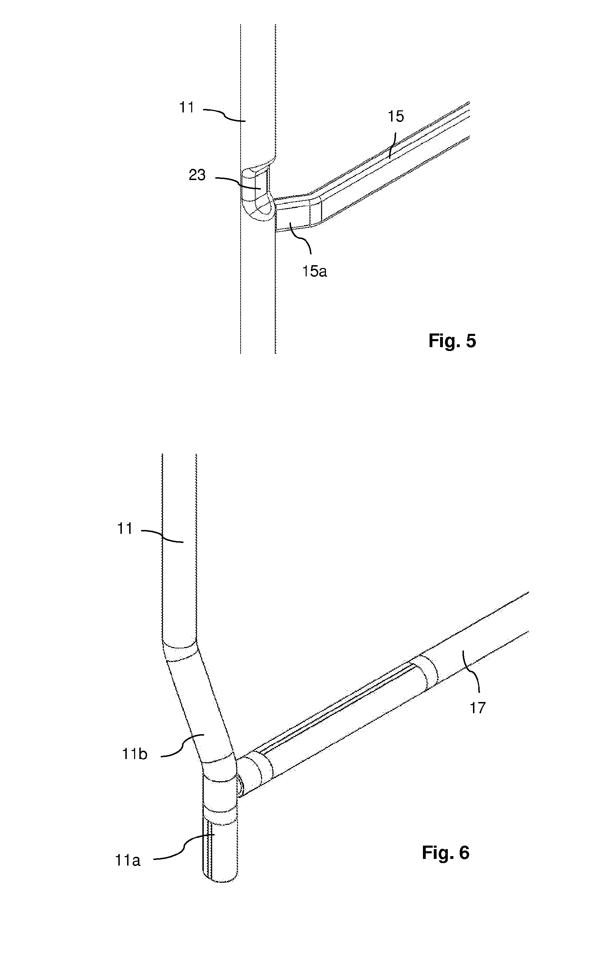

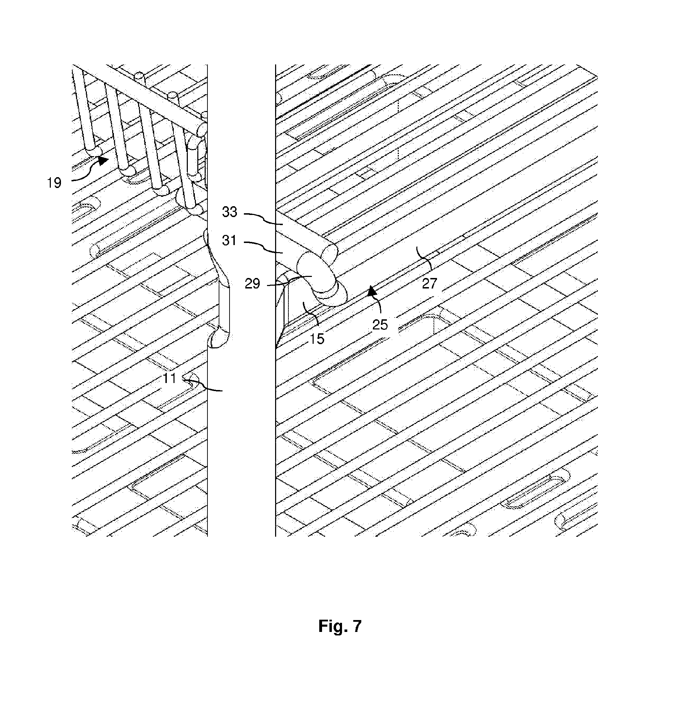

Wie aus den Fig., insbesondere Fig. 3 und 5 ersichtlich, weisen die vorderen Endstreben 11 der Seitenwände 7 an ihren Innenseiten Einbuchtungen 23 auf, die hinsichtlich ihrer Höhe jeweils knapp oberhalb den Tragstreben 15 liegen. Die Tiefe der Einbuchtungen 23 ist so gewählt, dass ein Einschubboden 19, welcher an beiden Seiten sich seitlich nach außen erstreckende Auflagemittel 25 aufweist von vorne zwischen die Seitenwände 7 eingeschoben werden kann. Durch das Vorsehen der Einbuchtungen 23 ist es möglich, die Auflagemittel als bügelartige Elemente (siehe Fig. 7) auszubilden, die nach unten abgewinkelt sind. Die bügelartigen Elemente weisen dabei in einer Richtung längs der Seitenwand verlaufende Streben 27 auf, welche durch das Vorsehen nach unten abgewinkelter Abschnitte 29 die Tragstreben 15 umfassen. Hierdurch wird eine seitliche Fixierung des Einschubbodens 19 erreicht.

Im dargestellten Ausführungsbeispiel gemäß Fig. 7 ist der nach unten abgewinkelte Abschnitt 29 mit einer Auflagestrebe 31 verbunden, die mit einer Querstrebe 33 des Einschubbodens 19 verbunden ist. Derartige Auflagestreben und Querstreben 31, 33 sind sowohl am jeweils vorderen seitlichen Bereich des Einschubbodens 19 vorgesehen, als auch an dessen jeweils hinteren seitlichen Bereich. Die Querstrebe 33 und die Auflagestrebe 31 liegen im eingesetzten Zustand des Einschubbodens 19 jeweils auf der Oberseite der betreffenden Tragstrebe 15 auf. Es ist jedoch ebenfalls möglich, den nach unten abgewinkelten Abschnitt 29 unmittelbar an der Querstrebe 33 vorzusehen.

Zusätzlich kann der Einschubboden 19 über weitere Querstreben 35 (Fig. 1) verfügen, die ebenfalls so weit nach außen geführt sind, dass sie auf der betreffenden Tragstrebe 15 aufliegen.

Wie aus Fig. 7 ersichtlich, ist der nach unten abgewinkelte Abschnitt 29 vorzugsweise so angeordnet, dass er sich jeweils (an jeder Ecke des Einschubbodens 19) im eingesetzten Zustand des Einschubbodens 19 jeweils in der Nachbarschaft der Verbindungsabschnitte 15a bzw. 15b befindet. Hierdurch ergibt sich auch eine Fixierung des Einschubbodens im eingesetzten Zustand in Einschubrichtung.

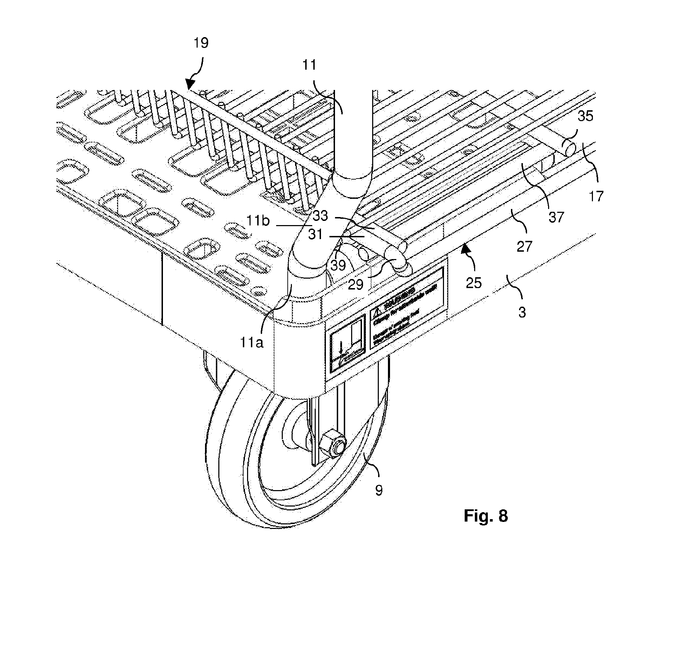

Wie aus Fig. 8 ersichtlich, ist es ebenfalls möglich, einen derart gestalteten Einschubboden 19 unmittelbar über dem Boden 3 des Rollbehälters 1 einzusetzen. In diesem Fall liegen unter den Querstreben 31 bzw. 33 vorgesehene Längsstreben 37, 39, die rechtwinkelig zu den Querstreben 31, 33 angeordnet sind, jeweils unmittelbar auf der unteren Basisstrebe 17 auf. Position und Abstand der Längsstreben 37, 39 sind so gewählt, dass der Umfang der Verbindungsstrebe 17 so beaufschlagt wird, der Einschubbodens 19 gegen seitliches Verschieben fixiert ist.

Die Strebe 17, die mit den nach unten abgewinkelten Abschnitten 29 verbunden ist, umgreift in diesem Fall die Seitenwandung des Bodens 3 mit einem definierten Abstand, ohne dass hierdurch eine seitliche Fixierung erfolgt.

In die in Fig. 8 dargestellte Position kann der Einschubboden 19 jedoch nicht mehr von vorne eingeschoben werden. Vielmehr muss dieser in diese Position von oben eingesetzt werden, beispielsweise durch ein verkantetes, d.h. leicht schräges Einführen von vorne zwischen die Seitenwände 7 und ein anschließendes Absetzen auf den Boden 3. Selbstverständlich kann das Einschieben auch von der Seite durch die vorderen und hinteren Endstreben der Seitenwände 7 hindurch erfolgen. Dies gilt zumindest dann, wenn nicht nur die Querstreben 31 einen Abstand aufweisen, der kleiner ist als der seitliche Abstand der Endstreben 11, 13, sondern auch der gesamte Einschubboden in seiner Breite kleiner ist als dieser Abstand.

Bei einem Einschieben eines Einschubbodens 19 von vorne (beispielsweise in Fig. 1 dargestellt) ergibt sich ein hinterer Anschlag für die Einschubbewegung durch die Anlage der Querstrebe 31 an der hinteren Endstrebe 13 bzw. durch den Anschlag des abgewinkelten Abschnitts 29 am hinteren Verbindungsabschnitt 15b der Tragstrebe 15. In gleicher Weise kann bei einer korbartigen Ausbildung des Einschubbodens 19 dessen hintere Korbwand so ausgebildet sein, dass diese an der Vorderseite der hinteren Endstreben 13 anstößt.

Sind weitere seitliche vertikale Streben für die Seitenwände 7 erforderlich, so können diese, wie bereits vorstehend ausgeführt, dadurch mit den Seitenwänden verbunden werden, dass die Tragstreben 15 einen oder mehrere an ihrer Unterseite nach außen ragende Vorsprünge oder Verbindungselemente aufweisen. An diesen können dann die vertikalen Streben befestigt werden, wobei diese ebenfalls in demjenigen Zwischenraum angeordnet sein müssen der vorstehend im Zusammenhang mit einer möglichen Anordnung der Bereiche der Tragstreben 15 zwischen den Verbindungsabschnitten 15a, 15b definiert wurde. Dies ist erforderlich, um die Stapelbarkeit zu gewährleisten.

Auf diese Weise ergibt sich ein konstruktiv einfacher stapelbarer Rollbehälter, der zudem die Möglichkeit aufweist, zwischen Böden nicht nur in ein seitliches Gitter der Seitenwände einzuhängen, sondern von vorne einzuschieben.

## Patentansprüche

1. Stapelbarer Rollbehälter, insbesondere für den Transport von Lebensmitteln, Kosmetikartikeln oder Gebrauchsgegenständen in Großgebinden,
mit einem vorzugsweise rechteckigen Boden (3), an welchem unterseitig Transportrollen (5) und zwei einander gegenüberstehende Seitenwände (7) angeordnet sind,
wobei jede der einander gegenüberstehenden Seitenwände (7) eine vertikale vordere Endstrebe (11) und eine über mehrere horizontale Verbindungsstreben (15) verbundene vertikale hintere Endstrebe (13) aufweist,
wobei die vertikalen vorderen Endstreben (11) mit ihren Innenseiten in jeweils einer von zwei vertikalen Referenzebenen (E-E) liegen und wobei die hinteren Endstreben (13) gegenüber der betreffenden Referenzebene (E-E) so weit nach innen versetzt sind, so dass ein weiterer derartiger Rollbehälter (1) von vorn zwischen die Seitenwände (7) des Rollbehälters (1) einsetzbar ist, und
wobei die Verbindungsstreben (15) so angeordnet und ausgebildet sind, dass sie bis auf einen vorderen Verbindungsabschnitt (15a) mit der vorderen Endstrebe (11) und bis auf einen hinteren Verbindungsabschnitt (15b) mit der hinteren Endstrebe (13) im Zwischenraum liegen, der durch die Referenzebene (E-E) und eine innere Begrenzungsebene begrenzt ist, welche durch die Außenseiten der hinteren Endstreben (13) definiert ist und parallel zur betreffenden Referenzebene (E-E) liegt,
**dadurch gekennzeichnet,**
**dass** die Verbindungsstreben als Tragstreben (15) ausgebildet sind, so dass jeweils zwei einander zugeordnete Tragstreben (15) der beiden Seitenwände (7) als Tragmittel und Führungsmittel für jeweils einen Einschubboden (19) dienen, welcher zwischen die Seitenwände (7) einschiebbar ist.

2. Behälter nach Anspruch 1, **dadurch gekennzeichnet, dass** vertikale Streben der Seitenwände vorgesehen sind, welche an den Außenseiten der Tragstreben (15) mit diesen verbunden sind.

3. Behälter nach Anspruch 2, **dadurch gekennzeichnet, dass** die Tragstreben (15) einen Querschnitt aufweisen, welcher im unteren äußeren Bereich einen oder mehrere Vorsprünge oder einen in Längsrichtung durchgehenden Vorsprung aufweist, an dessen Außenseite die vertikalen Streben befestigt sind, wobei auch die vertikalen Streben im Zwischenraum liegen, der durch die betreffenden Referenzebene (E-E) und die innere Begrenzungsebene begrenzt ist.

4. Behälter nach einem der vorhergehenden Ansprüche, **dadurch gekennzeichnet, dass** der vordere Verbindungsabschnitt (15a) einer Tragstrebe bezogen auf die Referenzebene (E-E) einwärts und der hintere Verbindungsabschnitt (15b) auswärts gekrümmt ist und dass der dazwischen liegende Abschnitt der Tragstrebe (15) parallel zur Referenzebene (E-E) verläuft.

5. Behälter nach einem der vorhergehenden Ansprüche, **dadurch gekennzeichnet, dass** an der Innenseite der vorderen Endstreben (11) in jeweils einem Bereich oberhalb der Höhe jeder Tragstrebe (15) eine Einbuchtung (23) vorgesehen ist, wobei der Boden jeder Einbuchtung (23) vorzugsweise so tief gewählt ist, dass er in einer zur Referenzebene (E-E) parallelen Ebene liegt, welche durch die Außenseite des mittleren Abschnitts der Tragstrebe (15) definiert ist, oder gegenüber dieser Ebene nach außen versetzt ist.

6. Behälter nach Anspruch 5, **dadurch gekennzeichnet, dass** die jede Einbuchtung (23) eine Höhe aufweist, welche größer oder gleich ist der Höhe von seitlichen Auflagemitteln (25) eines Einschubbodens, welcher von vorn zwischen die Seitenwände (7) des Behälters (1) einsetzbar ist.

7. Behälter nach einem der vorhergehenden Ansprüche, **dadurch gekennzeichnet, dass** die Seitenwände (7) und/oder die Abschlusswand über Steckverbindungen in Aussparungen am Boden (3) befestigt sind.

8. Einschubboden für einen Behälter nach einem oder mehreren der vorhergehenden Ansprüche, **dadurch gekennzeichnet, dass** seitliche Auflagemittel (25) vorgesehen sind, welche im in den Behälter eingesetzten Zustand auf den Tragstreben (15) aufliegen.

9. Einschubboden nach Anspruch 8, **dadurch gekennzeichnet, dass** die Auflagemittel (25) an jeder Seite des Einschubbodens einen oder mehrere nach unten abgewinkelte, bügelartige Arme aufweisen, welche die Tragstreben (15), vorzugsweise im gesamten Bereich zwischen den Verbindungsabschnitten (15a, 15b), umgreifen.

10. Einschubboden nach Anspruch 9, **dadurch gekennzeichnet, dass** die Auflagemittel (25) Querstreben (33, 35) aufweisen, welche mit ihren außen liegenden Bereichen auf den Tragstreben des Behälters aufliegen.
